# EUROPEAN PATENT SPECIFICATION

(11) **EP 1 820 678 B1**
(45) Date of publication and mention of the grant of the patent: **03.09.2008**
(21) Application number: 06013172.9
(22) Date of filing: 26.06.2006
(51) Int. Cl.: B60H 1/32

(54) **Air conditioning system**
Klimaanlage
Système de climatisation

(30) Priority: 21.02.2006 JP 2006044421
(43) Date of publication of application: 22.08.2007
(73) Proprietor: Denso Corporation, Kariya-city, Aichi-pref. 448-8661 (JP)
(72) Inventor: Shin, Nishida, c/o Denso Corporation, Kariya-city Aichi-Pref. 448-8661 (JP); Shuichi, Mizuno, c/o Denso Corporation, Kariya-city Aichi-Pref. 448-8661 (JP)
(74) Representative: Klingseisen, Franz

(56) References cited:
- WO-A-20/06082766
- US-A1- 2005 022 545
- US-B1- 6 182 744

## Description

### BACKGROUND OF THE INVENTION

### 1. Field of the Invention

This invention relates to an air conditioning system using the supercritical vapor compression refrigeration cycle with the pressure on the high pressure side not lower than the critical pressure, and more particularly to radiation heat exchanger for cooling a high-pressure refrigerant.

### 2. Description of the Related Art

In an ordinary radiation heat exchanger of the vapor compression refrigeration cycle using a fron refrigerant, the refrigerant temperature is constant during the condensation. In the vapor compression refrigeration cycle using carbon dioxide gas, on the other hand, the high pressure reaches a supercritical level in a high-temperature environment, and therefore a supercritical fluid is developed.

As a result, the temperature gradually decreases from the inlet toward the outlet of the radiation heat exchanger with the radiation of heat from the refrigerant into the air. In the radiation heat exchanger of this type, therefore, the refrigeration cycle efficiency can be improved by reducing the cooling air temperature.

A conventional air conditioning system of this type is known, as disclosed in US 6 182 744, which is considered as the closest prior art, and in Japanese Unexamined Patent Publication No. 2001-201193. In this conventional system, a duct member is arranged upstream of the radiation heat exchanger to guide the air introduced from outside toward the condenser.

This duct member forms a frame extending around the radiation heat exchanger in such a manner as to cover the air path of the whole radiation heat exchanger and assumes a shape open to the upstream side of the radiation heat exchanger in the air flow. Further, the downstream side of the duct member is arranged integrally with the radiation heat exchanger in order to prevent the air heated in the engine compartment from flowing into the air path along the periphery of the radiation heat exchanger.

The air introduced from outside is guided toward the radiation heat exchanger through the duct member and promotes heat radiation from the refrigerant flowing therein. As a result, the air heated by the engine is prevented from flowing in along the periphery of the radiation heat exchanger, while at the same time leading the atmospheric air introduced into the engine compartment toward the radiation heat exchanger thereby to reduce the cooling air temperature.

In the configuration disclosed in Japanese Unexamined Patent Publication No. 2001-201193, however, the duct member is formed to cover the whole radiation heat exchanger and therefore has a complicated shape. Generally, the radiation heat exchanger is mounted on an automotive vehicle through a damping member and the duct member vibrates together with the radiation heat exchanger. Consequently, the duct member is required to have rigidity in order to withstand the vibration and a complicated shape for preventing interference with the vehicle body resulting in a high parts cost.

Also, in the air conditioning system disclosed in Japanese Unexamined Patent Publication No. 2001-201193, when air is blowing from behind the vehicle in a stationary state, the high-temperature air heated in the engine compartment may be led by the duct member by circumvention from the vehicle front. In particular, the cooling air flowing through the air path in the neighborhood of the refrigerant outlet where the refrigerant temperature is lowest may be led at a higher temperature than the atmospheric air. This leads to the problem of reduced refrigeration cycle efficiency.

Accordingly, it is an object of this invention to provide an air conditioning system in which the parts cost can be reduced and the refrigeration cycle efficiency improved.

### SUMMARY OF THE INVENTION

According to this invention, there is provided an air conditioning system applicable to a supercritical vapor compression refrigeration cycle with the pressure on the high-pressure side not lower than the critical pressure of the refrigerant and including a radiation heat exchanger (200, 300, 400, 500, 600, 700) for cooling the high-pressure refrigerant discharged from a compressor, wherein the radiation heat exchanger (200, 300, 400, 500, 600, 700) is arranged downstream of a leading member (270, 280, 370, 470, 570, 670, 770) for leading the air introduced from outside strategically into the air path of the radiation heat exchanger (200, 300, 400, 500, 600, 700) in the neighborhood of the refrigerant outlet.

According to this invention, the air path in the neighborhood of the refrigerant outlet of the radiation heat exchanger (200, 300, 400, 500, 600, 700) can be cooled strategically, and therefore the refrigeration cycle efficiency is improved. In the air path other than in the neighborhood of the refrigerant outlet, the refrigerant temperature is still high and the temperature difference between the cooling air and the refrigerant is ensured. Therefore, the heat exchange characteristic is not degraded.

According to this invention, the radiation heat exchanger (200) is formed in such a manner that the refrigerant flows substantially in a horizontal direction, and the air path in the neighborhood of the refrigerant outlet is formed on the lower side of the air path of the radiation heat exchanger (200). Thus, the leading member (270) is divided into a plurality of guide members (271, 272, 273, 274, 283, 284, 285) arranged to surround the air path under the radiation heat exchanger (200) strategically.

According to this invention, the air path in the neighborhood of the refrigerant outlet rather than the whole radiation heat exchanger (200) is strategically surrounded by a plurality of the guide members (271, 272, 273, 274, 283, 284, 285). Therefore, the leading member (270) can be formed in a simple shape and small size, thereby reducing the parts cost.

According to this invention, the plurality of guide members (271, 272, 273, 274, 283, 284, 285) include a partitioning member (271) for separating the air path in the neighborhood of the refrigerant inlet and the air path in the neighborhood of the refrigerant outlet from each other.

According to this invention, provision of the partitioning member (271) makes it possible to cover the air path in the neighborhood of the refrigerant outlet strategically in a vehicle having a duct member for surrounding the air path of the whole radiation heat exchanger (200) with a plurality of guide members (271, 272, 273, 274, 283, 284, 285).

According to this invention, each of the guide members (272, 273, 274, 283, 284, 285) is formed in such a manner as to suppress the inflow of circumventing air into the air path in the neighborhood of the refrigerant outlet.

According to this invention, the low-temperature cooling air led by the plurality of guide members (272, 273, 274, 283, 284, 285) flows through the air path in the neighborhood of the refrigerant outlet without inflow of the high-temperature air around the radiation heat exchanger (200), and therefore the refrigeration cycle efficiency is improved.

According to this invention, there is provided an automotive air conditioning system, wherein the radiation heat exchanger (200) is arranged upstream of an on-vehicle engine radiator (6) in the air flow, and wherein the leading member (270, 280) includes a plurality of guide members (272, 273, 274, 283, 284, 285) arranged on the vehicle body.

According to this invention, there is provided an automotive air conditioning system, wherein a temperature increase of the cooling air flowing through the air path in the neighborhood of the refrigerant outlet of the radiation heat exchanger can be suppressed to a greater degree with the duct member strategically covering a part of the radiation heat exchanger (200) than in the conventional system having the leading member (270, 280) surrounding the whole radiation heat exchanger (200) against the flow of the air heated in the engine room by circumvention from the vehicle front when wind is blowing from behind the vehicle in a stationary state.

Also, in view of the fact that the guide members (271, 272, 273, 274, 283, 284, 285) are arranged on the vehicle body side, the damping member on the radiation heat exchanger (200) side can be simplified. Thus, the parts cost is not increased.

According to this invention, the leading member is a cylindrical duct member (370, 470, 570, 670, 770) formed strategically to cover the air path in the neighborhood of the refrigerant outlet of the radiation heat exchanger (300, 400, 500, 600, 700).

According to this invention, the duct member (370, 470, 570, 670, 770) is formed strategically to surround the neighborhood of the refrigerant outlet rather than the whole radiation heat exchanger (300, 400, 500, 600, 700). Thus, the duct member (370, 470, 570, 670, 770) can be formed in a simple shape of small size for a reduced parts cost.

Also, the portion not surrounded by the duct member (370, 470, 570, 670, 770) is still high in refrigerant temperature, and therefore a temperature difference is ensured between the cooling air and the refrigerant, thereby causing no deterioration of the heat exchange characteristic.

According to this invention, the duct member (370, 470, 570, 670, 770) is formed in such a manner that the air around the radiation heat exchanger (300, 400, 500, 600, 700) is prevented from flowing toward the air path in the neighborhood of the refrigerant outlet from the downstream side in the air flow.

According to this invention, the low-temperature cooling air introduced by the duct member (370, 470, 570, 670, 770) flows through the air path in the neighborhood of the refrigerant outlet without an inflow of the high-temperature air from around the radiation heat exchanger (300, 400, 500, 600, 700), and therefore the refrigeration cycle efficiency is improved.

According to this invention, the duct member (370, 470, 570, 670, 770) is formed preferably to surround not less than at least about one third of the total area of the air path of the radiation heat exchanger (300, 400, 500, 600, 700). Therefore, the heat exchange characteristic is not adversely affected even in the case where the high-temperature air around the radiation heat exchanger (300, 400, 500, 600, 700) flows into the portion not covered by the the duct member (370, 470, 570, 670, 770).

According to this invention, the radiation heat exchanger (400) is formed in such a manner that the refrigerant flows substantially in the vertical direction and the neighborhood of the refrigerant outlet is formed on the upper or lower side of the air path of the radiation heat exchanger (200).

According to this invention, an opening to introduce atmospheric air is suitable as it is formed generally on the upper or lower side of the vehicle, and the mountability of the duct member (470) on the vehicle is superior.

According to this invention, the radiation heat exchanger (300, 500, 600) is formed in such a manner that the refrigerant flows substantially in a horizontal direction and the neighborhood of the refrigerant outlet is formed on the left or right side of the air path of the radiation heat exchanger (300, 500, 600).

According to this invention, the opening in the vehicle to introduce the atmospheric air is suitable, though formed on the left or right side of the vehicle, and the mountability of the duct member (370, 570, 670) on the vehicle is superior.

According to this invention, the radiation heat exchanger (300, 400, 500) is formed in such a manner that the refrigerant flows against the air flow. Thus, the air path in the neighborhood of the refrigerant outlet can be suitably formed on the upstream side in the air flow where the low-temperature air flows.

According to this invention, there is provided an automotive air conditioning system with the radiation heat exchanger (300, 400, 500, 600) arranged upstream of the on-vehicle engine radiator (6) in the air flow, wherein the duct member (370, 470, 570, 670) is formed in such a manner that the air introduced from the opening in the vehicle front at the upstream end in the air flow is led to the air path in the neighborhood of the refrigerant outlet.

According to this invention, there is provided an automotive air conditioning system, in which unlike the duct member (370, 470, 570, 670) of conventional system, a part of the radiation heat exchanger (300, 400, 500, 600), but not the whole radiation heat exchanger, is strategically surrounded and therefore a temperature increase of the cooling air flowing through the air path in the neighborhood of the refrigerant outlet can be suppressed more than in the prior art against the inflow of circumventing air heated in the engine compartment when air is blowing from behind the vehicle in a stationary state.

The reference numerals inserted after the names of the component parts above indicate the correspondence with the specific means of the embodiments described later.

The present invention may be more fully understood from the description of preferred embodiments of the invention, as set forth below, together with the accompanying drawings.

### BRIEF DESCRIPTION OF THE DRAWINGS

Fig. 1 is a schematic diagram showing the manner in which the air conditioning system having the supercritical vapor compression refrigerating cycle according to a first embodiment of the invention is mounted on a vehicle.
Fig. 2A is a schematic diagram showing a general configuration of a radiation heat exchanger and a duct member according to the first embodiment of the invention.
Fig. 2B is a view taken along arrow A in Fig. 2A.
Fig. 3 is a schematic diagram showing a general configuration of a radiation heat exchanger and a duct member according to a second embodiment of the invention.
Fig. 4A is a schematic diagram showing a general configuration of a radiation heat exchanger and a duct member according to a third embodiment of the invention.
Fig. 4B is a sectional view taken along arrow A in Fig. 4A.
Fig. 5 is a diagram showing the refrigerant temperature characteristic with the duct member according to the third embodiment of the invention.
Fig. 6 is a diagram showing the refrigerant temperature characteristic without the duct member.
Fig. 7A is a schematic diagram showing a general configuration of a radiation heat exchanger and a duct member according to a fourth embodiment of the invention.
Fig. 7B is a sectional view taken along arrow A in Fig. 7A.
Fig. 8A is a schematic diagram showing a general configuration of a radiation heat exchanger and a duct member according to a fifth embodiment of the invention.
Fig. 8B is a sectional view taken along arrow A in Fig. 8A.
Fig. 9A is a schematic diagram showing a general configuration of a radiation heat exchanger and a duct member according to a sixth embodiment of the invention.
Fig. 9B is a sectional view taken along arrow A in Fig. 9A.
Fig. 10 is a sectional view showing the shape of the duct member according to another embodiment.

### DESCRIPTION OF THE PREFERRED EMBODIMENTS

### (First embodiment)

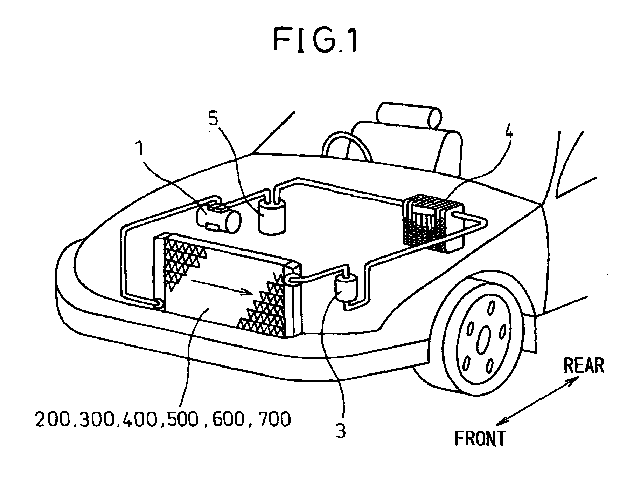

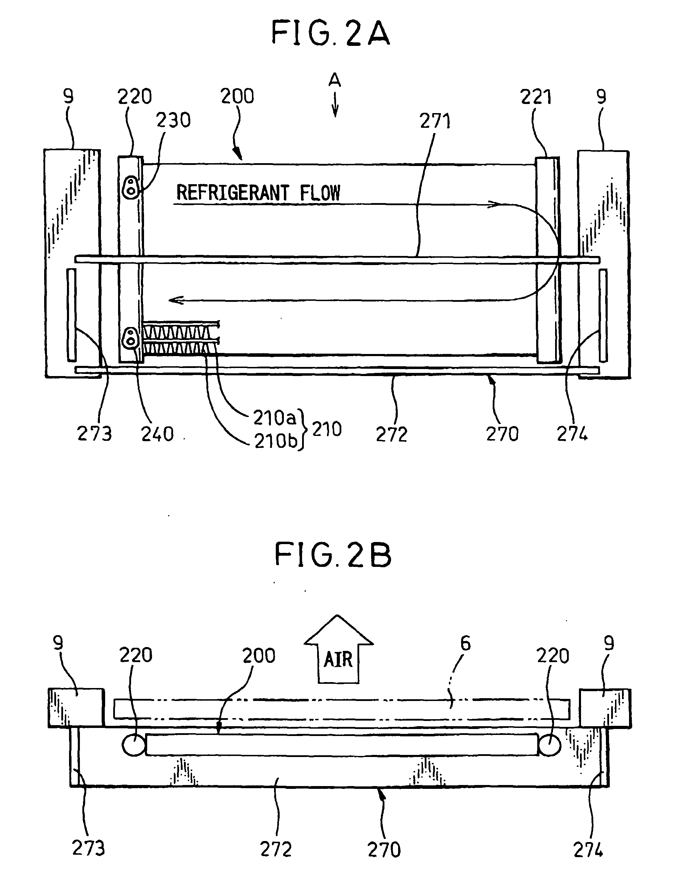

An air conditioning system according to a first embodiment of the invention is explained below with reference to Figs. 1 and 2. This embodiment is an application of a radiation heat exchanger 200 of the supercritical vapor compression refrigeration cycle of this invention to an air conditioning system for an automotive vehicle. Fig. 1 is a schematic diagram showing the manner in which the air conditioning system having the supercritical vapor compression refrigerating cycle is mounted on the vehicle, Fig. 2A is a schematic diagram showing a general configuration of the radiation heat exchanger 200 and a duct member 270, and Fig. 2B is a view taken along arrow A in Fig. 2A.

In the air conditioning system according to this embodiment, as shown in Fig. 1, a compressor 1, a radiation heat exchanger 200, a decompression means 3, a refrigerant evaporator 4 and accumulator 5 are connected in that order by a refrigerant circuit. The refrigerant circuit includes a supercritical vapor compression refrigerating cycle with carbon dioxide (CO₂) sealed therein as a refrigerant.

The compressor 1 draws in a low-temperature low-pressure gas-phase refrigerant and compresses the refrigerant into a high-temperature high-pressure supercritical state. The air conditioning system is driven through a clutch (not shown) by a power transmission means including a pulley and a V belt (not shown) with a engine for driving (not shown) as a drive source.

The radiation heat exchanger 200 is a gas cooler for cooling the high-temperature high-pressure refrigerant compressed by the compressor by heat exchange with the air. The air is introduced from outside the compartments by an engine radiator fan, not shown, and passed through the radiation heat exchanger 200 thereby to cool the high-pressure refrigerant flowing in the radiation heat exchanger 200. The internal pressure is a supercritical pressure higher than the critical pressure. The radiation heat exchanger 200 is explained in detail later.

The decompression means 3 is a pressure control valve for reducing the pressure of the influent refrigerant cooled by the radiation heat exchanger 200. At the same time, the temperature of the refrigerant at the outlet cooled by the radiation heat exchanger 200 is controlled in such a manner as to maximize the coefficient of performance COP. An example described in Japanese Unexamined Patent Publication No. 9-264622 may be used.

In the refrigerant evaporator 4, a gaseous double-phase refrigerant decompressed by the decompression means 3 is evaporated by heat exchange with the indoor air blown by an indoor fan (not shown). The refrigerant evaporator 4, together with the indoor fan (not shown), is stowed in an air-conditioning case (not shown) arranged in the instrument panel on the front part of the compartments.

The accumulator 5 separates the influent refrigerant evaporated by the refrigerant evaporator 4 into a gas-phase refrigerant and a liquid-phase refrigerant. In accordance with the specific weight of the gas-phase and liquid-phase refrigerants, the liquid-phase portion is formed in the lower part of the container and the gas-phase portion in the upper part of the container. That part of the refrigerant separated into a gas and a liquid by the accumulator 5 which is stored in the gas-phase portion as a gas-phase refrigerant is drawn into the compressor 1.

Next, the radiation heat exchanger 200 and the leading member 270 are explained with reference to Figs. 2A, 2B. The radiation heat exchanger 200, as shown in Fig. 2B, is arranged in the air flow upstream of the engine radiator 6 mounted on the vehicle front. The external air is introduced from the vehicle front by a cooling fan (not shown) arranged in the air flow downstream of the engine radiator 6 thereby to cool the heat generated by the high-pressure refrigerant and the drive engine.

The radiation heat exchanger 200 according to this embodiment, as shown in Figs. 2A, 2B, includes headers 220, 221 arranged at the left and right ends, respectively, of the heat exchange core portion 210, which headers 220, 221 are connected by a plurality of refrigerant tubes 210a. The refrigerant flows from the left header 220 to the right header 221 substantially in horizontal direction and, after turning around, flows to the left header 220.

A heat exchange core portion 210 for cooling the high-pressure refrigerant flowing in the refrigerant tubes 210a is formed of the refrigerant tubes 210a and the corrugated fins 210 arranged between the refrigerant tubes 210a.

Also, reference numeral 230 designates a refrigerant inlet communicating with the discharge side of the compressor 1, which inlet is arranged in the upper portion of the left header 220, and numeral 240 designates a refrigerant outlet communicating with the decompression means, which outlet is arranged in the lower portion of the left header 220. A partitioning plate, not shown, for defining the upper portion and the lower portion is arranged substantially at the middle portion in the left header 220.

As a result, the refrigerant compressed by the compressor 1 flows into the upper portion of the left header 220 from the refrigerant inlet 230 and flows through the refrigerant tubes 210a toward the right header 221 from the left header 220.

The refrigerant flowing into the upper portion of the right header 221 flows in the right header 221 downward, and after further flowing from the right header 221 toward the left header 220 through the refrigerant tubes 210a, flows out of the refrigerant outlet 240.

Specifically, the refrigerant flowing in from the refrigerant inlet 230, as indicated by arrow, turns around and flows from the upper portion of the air path to the lower portion of the air path. In the process, the refrigerant exchanges heat with the air introduced from the vehicle front and cools the refrigerant flowing in the refrigerant tubes 210a.

In the refrigeration cycle using carbon dioxide (CO₂) as a refrigerant, the refrigerant temperature decreases by radiation under the operating conduction where the high-pressure side pressure increases beyond the critical pressure, so that the refrigerant is cooled almost to the air temperature in the air path in the refrigerant outlet 240 and the neighborhood thereof.

Specifically, in the air path in the neighborhood of the refrigerant outlet 240, as compared with the air path of the radiation heat exchanger 200 as a whole, the cool refrigerant and the cool air exchange heat with each other so that the heat exchange efficiency of the radiation heat exchanger 200 is improved for a higher refrigeration cycle efficiency.

In view of this, the lower portion of the air path of the whole radiation heat exchanger 200 in the neighborhood of the refrigerant outlet 240 is covered strategically by the duct member 270. This leading member 270 is configured as a plurality of guide members 271 to 274 constituting a substantially rectangular cylinder to lead the air introduced from an air inlet (not shown) on the vehicle front strategically to the lower portion of the air path.

The plurality of the guide members 271 to 274 are configured with each end thereof supported by a vehicle part such as the cowl or the hold fitting of the engine radiator on the vehicle body 9, and the other end thereof covering one side of the lower portion of the air path. More specifically, the guide members are divided into the upper and lower guide members 271, 272 extending substantially in horizontal and longitudinal directions and the left and right guides 273, 274 extending substantially in vertical and longitudinal directions in such a manner as to cover the four sides of the lower portion of the air path.

The guide members 271, 272 are tabular members located above and under the air path in the neighborhood of the refrigerant outlet and extending substantially in horizontal and longitudinal directions. The guide members 273, 274, on the other hand, are tabular members located on the left and right sides of the air path in the neighborhood of the refrigerant outlet and extending substantially in vertical and longitudinal directions.

The guide member 271 located above is a partitioning member for partitioning the front surface (upstream portion in the air flow) of the radiation heat exchanger 200 into the air path in the neighborhood of the refrigerant inlet 230 (upper area) and the air path (lower area) in the neighborhood of the refrigerant outlet 240, and constitutes a circumvention suppression member for suppressing circumvention of the air from the upper area to the lower area of the front surface of the radiation heat exchanger 200. In the case under consideration, the whole downstream side is arranged at the portion partitioning the upper and lower areas.

The guide member 272 arranged in the lower portion is a circumvention suppression member for suppressing circumvention of the air from the periphery of the radiation heat exchanger 200 to the front surface of the radiation heat exchanger 200. This guide member 272 has the other end thereof arranged at least in the vicinity of the air path in the neighborhood of the refrigerant outlet 240 of the radiation heat exchanger 200.

Further, the guide member 272 suppresses circumvention of the air from the lower portion to the front surface of the radiation heat exchanger 200 more positively and to a greater degree than from the upper portion to the front surface of the radiation heat exchanger 200. In the case under consideration, the downstream side covers substantially the whole width of the lower end of the radiation heat exchanger 200.

The guide members 273, 274 arranged on the left and right sides, on the other hand, suppress circumvention of the air from the side lower portion to the front surface of the radiation heat exchanger 200 more positively and to a greater degree than circumvention of the air from the side upper portion to the front surface of the radiation heat exchanger 200. The guide members 273, 274 are arranged on the lower side portion of the radiation heat exchanger 200 along the height thereof. In particular, the guide member 273 is arranged at least in the neighborhood of the refrigerant outlet 240.

In addition, the guide member 271 suppresses undesirable circumvention of the air on the front surface of the radiation heat exchanger 200. Also, the guide members 272, 273, 274 suppress the amount of circumvention of the air from the periphery of the radiation heat exchanger 200 downstream in the refrigerant flow to the front surface of the radiation heat exchanger 200 to a greater degree than the amount of circumvention of the air from the periphery of the radiation heat exchanger 200 upstream in the refrigerant flow to the front surface of the radiation heat exchanger 200.

The plurality of the guide members 271 to 274 are each arranged upstream of the radiation heat exchanger 200 in the air flow through an optimum downstream gap. In other words, the downstream side of the guide members 271 to 274 forms an optimum gap corresponding to the displacement due to the vibration of the radiation heat exchanger 200.

Also, the plurality of the guide members 271 to 274 may be formed of a heat-resistant resin material or a tabular metal material such as aluminum or iron. As a result, the leading member 270 can be formed in a simple shape. Incidentally, the plurality of the guide members 271 to 274 may be provided by one component part of the vehicle body in accordance with the structure of the vehicle on which the radiation heat exchanger 200 is mounted.

With the leading member 270 having the configuration described above, the portion covered by the plurality of the guide members 271 to 274, i.e. the neighborhood of the refrigerant outlet of the heat exchange core portion 210 can be supplied with the low-temperature air led by the leading member 270 but not the high-temperature air around the radiation heat exchanger 200.

The portion covered by the plurality of the guide members 271 to 274 still can ensure a temperature difference between the refrigerant temperature and the temperature of the air around the radiation heat exchanger 200, and the heat exchange characteristic is not degraded.

Comparison of the temperature characteristic in the presence of the leading member 270 of this type upstream of the radiation heat exchanger 200 with that in the absence of the leading member 270 shows that the refrigerant temperature in the neighborhood of the refrigerant outlet can be reduced about 5 °C more in the presence of the leading member 270. A temperature decrease of about 5 °C at the refrigerant outlet 240 improves the refrigeration cycle efficiency by about 15 %.

The refrigerant inlet 230, the refrigerant outlet 240 and the neighborhood of the refrigerant outlet, though formed on the left side according to the embodiment described above, may alternatively be formed on the right side.

In the air conditioning system according to the first embodiment, the radiation heat exchanger 200 is arranged downstream of the leading member 270 to lead the external air strategically to the air path in the neighborhood of the refrigerant outlet of the radiation heat exchanger 200.

Thus, the air path in the neighborhood of the refrigerant outlet of the radiation heat exchanger 200 can be strategically cooled for an improved refrigeration cycle efficiency. In the air path in other than the neighborhood of the refrigerant outlet, the refrigerant temperature is still high, and therefore a temperature difference is ensured between the cooling air and the refrigerant. Therefore, the heat exchange characteristic is not degraded.

Also, the leading member 270 is divided into a plurality of guide members 271 to 274 whereby the air path in the neighborhood of the refrigerant outlet of the radiation heat exchanger 200 is strategically covered. Thus, as compared with the configuration in which the whole radiation heat exchanger 200 is covered by the plurality of the guide members 271 to 274, the strategic arrangement of covering the air path in the neighborhood of the refrigerant outlet makes it possible to form the guide members 271 to 274 in a simple shape and small size. Thus, the parts cost can be reduced.

Further, the plurality of the guide members 272 to 274 are each formed so as to suppress the tendency of the external air flowing by circumvention to the front surface of the radiation heat exchanger 200 to flow into the air path in the neighborhood of the refrigerant outlet.

As a result, no high-temperature air around the radiation heat exchanger 200 flows in and the low-temperature cooling air led by the plurality of the guide members 272 to 274 flows through the air path in the neighborhood of the refrigerant outlet for an improved refrigeration cycle efficiency.

Also, in the automotive air conditioning system with the plurality of the guide members 271 to 274 arranged on the vehicle body, the temperature increase of the cooling air flowing through the air path in the neighborhood of the refrigerant outlet can be reduced more by strategically covering a part of the radiation heat exchanger 200 than with the leading member 270 in the prior art covering the whole radiation heat exchanger 200 while the air heated in the engine room flows by circumvention from the vehicle front when the air is blowing from behind the vehicle in a stationary state.

Also, the arrangement of the guide members 271 to 274 on the vehicle body simplifies the damping member on the radiation heat exchanger 200. As a result, the parts cost is not increased.

### (Second embodiment)

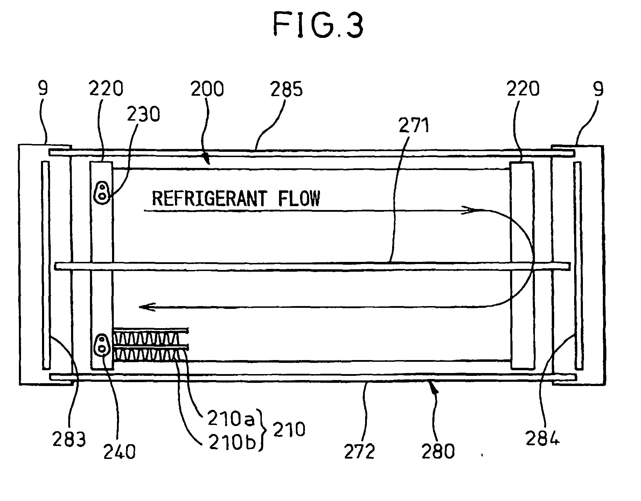

According to this embodiment, the arrangement of the duct member 280 on the vehicle side for covering the air path of the whole radiation heat exchanger 200 is accompanied, as shown in Fig. 3, by the arrangement of a partitioning member 271 for separation between the air path (upper area) in the neighborhood of the refrigerant inlet 230 and the air path (lower area) in the neighborhood of the refrigerant outlet 240.

The partitioning member 271 is the same as the upper guide member 271 described in the first embodiment, and separates the air path in the neighborhood of the refrigerant inlet 230 and the air path in the neighborhood of the refrigerant outlet 240 on the front surface of the radiation heat exchanger 200. Also, the partitioning member 271 functions as a circumvention suppression member for suppressing air circumvention from the upper area to the lower area on the front of the radiation heat exchanger 200. In the case under consideration, the whole downstream side of the partitioning member 271 is arranged at the portion separating the upper and lower areas.

Also, reference numeral 285 designates a guide member arranged at the upper end of the radiation heat exchanger 200. This guide member 285 suppresses circumvention of the air from the periphery of the radiation heat exchanger 200 to the front of the radiation heat exchanger 200. In this case, the downstream side of the suppression member is arranged substantially over the whole width of the upper end of the radiation heat exchanger 200.

With the configuration described above, suppose a vehicle in which having the duct member 280 for covering the air path of the whole radiation heat exchanger 200. The provision of the partitioning member 271 makes it possible to cover the air path in the neighborhood of the refrigerant outlet strategically.

In the embodiments described above, the leading member 270 is divided into four parts, i.e. the upper, lower, left and right guide members 271 to 274. The invention is not limited to this configuration, and the leading member 270 may be divided into more than four parts. Also, the shape of the leading member 270 is not limited to a rectangle.

### (Third embodiment)

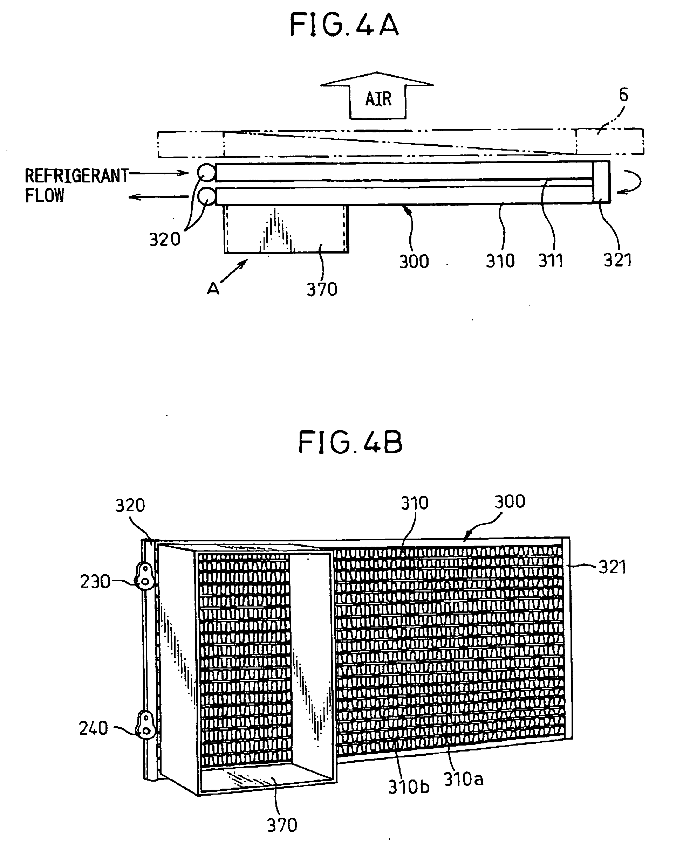

An air conditioning system according to a third embodiment is explained below with reference to Figs. 4A to 6.

In the air conditioning system according to this embodiment, as shown in Fig. 1, a compressor 1, a radiation heat exchanger 300, a decompression means 3, a refrigerant evaporator 4 and an accumulator 5 are connected in that order by a refrigerant circuit. The refrigerant circuit includes a supercritical vapor compression refrigeration cycle with carbon dioxide (CO₂) sealed as a refrigerant.

Next, the radiation heat exchanger 300 and the duct member 370 making up the essential parts of the invention are explained with reference to Figs. 4A, 4B. The radiation heat exchanger 300, as shown in Fig. 4A, is arranged upstream of the engine radiator 6 mounted on the front of the vehicle in the air flow, and the external air is introduced from the vehicle front by a cooling fan (not shown) arranged upstream of the engine radiator 6 in the air flow thereby to cool the heat generated by the high-pressure refrigerant and the drive engine.

The radiation heat exchanger 300 according to this embodiment, as shown in Figs. 4A, 4B, is configured so that the refrigerant flows against the air flow. Specifically, the heat exchange core portions 310, 311 making up the air path are divided into front and rear parts along the air flow each having a header 320 at the left and right ends. The headers 320, 324 are connected by a plurality of refrigerant tubes 310a.

The refrigerant tubes 310a and the corrugated fins 310b arranged between them make up a heat exchange core portion 310 for cooling the high-pressure refrigerant flowing in the refrigerant tubes 310a. Reference numeral 230 designates a refrigerant inlet leading to the outlet of the compressor 1, which inlet is arranged on one header 320 at the left end downstream in the air flow, while numeral 240 designates a refrigerant outlet communicating with the decompression means 240, which outlet 20 is arranged on the other header 320 at the left end upstream in the air flow.

As a result, the refrigerant compressed by the compressor 1 flows into the header 320 at the left end from the refrigerant inlet 230 arranged downstream in the air flow, and flows from the header 320 at the left end through the refrigerant tube 310a toward the header 321 at the right end. The refrigerant further flows from the header 321 at the right end upstream in the air flow through the upstream refrigerant tubes 310a toward the header 320 at the left end and flows out from the refrigerant outlet 240.

In other words, the high-pressure refrigerant flowing in from the refrigerant inlet 230, after being cooled by heat exchange with the air in the heat exchange core portion 311 downstream in the air flow, exchanges heat with the air introduced from the vehicle front in the heat exchange core portion 310 upstream in the air flow, and thus further cooled, flows to the refrigerant outlet 240.

In the refrigeration cycle with carbon dioxide (CO₂) as a refrigerant, the refrigerant temperature decreases with radiation in the operating condition in which the high pressure reaches the critical level, and the refrigerant is further cooled almost to the air temperature in the heat exchange core portion 310 upstream in the air flow and the neighborhood of the refrigerant outlet 240 of the heat exchange core portion 310.

As a result, the cool refrigerant at the outlet of the heat exchange core portion 310 exchanges heat with the cool external air, while the hot refrigerant at the inlet of the heat exchange core portion 311 exchanges heat with the heated air on the upstream side. With this configuration, the heat exchange efficiency of the radiation heat exchanger is improved, resulting in an improved refrigeration cycle efficiency.

Further, according to this invention, the air path of the heat exchange core portion 310 in the neighborhood of the refrigerant outlet thereof is surrounded by the rectangular cylindrical duct member 370. Specifically, the duct member 370 forms the air path by which the external air introduced from an opening (not shown) on the vehicle front is led to the air path in the neighborhood of the refrigerant outlet of the heat exchange core portion 310, while the air around the radiation heat exchanger 300 is prevented from flowing from the downstream side of the duct member 370 in the air flow toward the air path in the neighborhood of the refrigerant outlet of the heat exchange core portion 310.

The upstream end of the duct member 370 in the air flow is opened to the portion in contact with an opening (not shown) of the vehicle front. The duct member 370 may be formed of a heat-resistant resin material or a metal material such as aluminum or iron. As a result, a structure of a simplified shape is realized.

As a result, the portion covered by the duct member 370, i.e. the neighborhood of the refrigerant outlet of the heat exchange core portion 310 can be supplied with the low-temperature external air introduced by the duct member 370 without inflow of the high-temperature air from around the radiation heat exchanger 300. The portion not surrounded by the duct member 370, on the other hand, can ensure a refrigerant temperature difference with the air around the radiation heat exchanger 300, and therefore the heat exchange characteristic is not degraded.

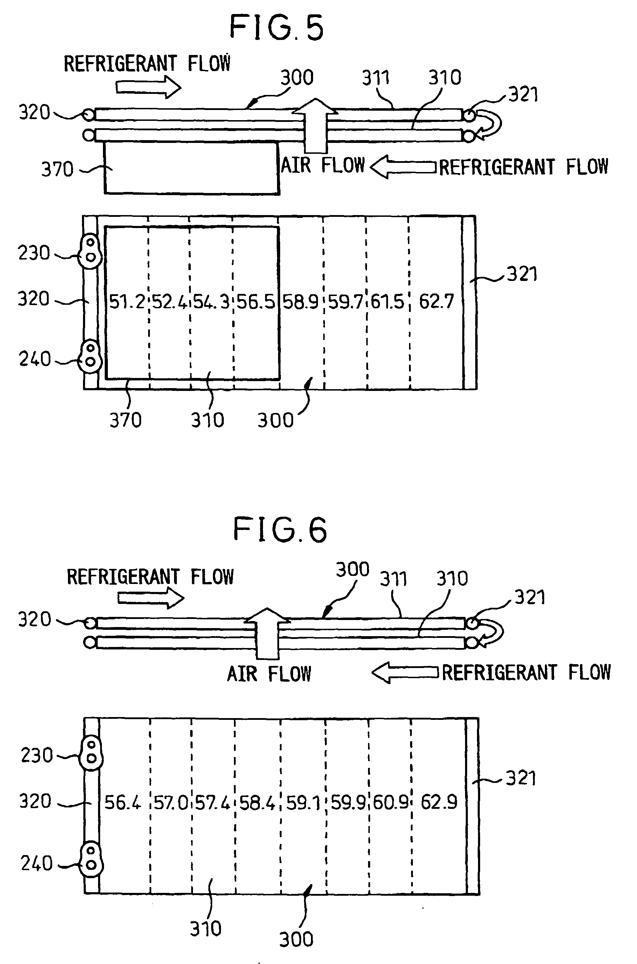

Next, the effects of this invention experimentally studied by the inventors are explained based on the characteristic diagram of the experimental result shown in Figs. 5, 6. The refrigerant temperature is compared between this invention in which the duct member 370 is used and the case in which it is not. In conducting the experiment, the temperature of the refrigerant flowing in the refrigerant tubes 310a was measured while the actual car is stationary in idling mode at an atmospheric temperature of 45 °C.

The temperature characteristic using the duct member 370 is shown in Fig. 5, and the temperature characteristic without the duct member 370 in Fig. 6. As shown in Fig. 5, the use of the duct member 370 can maintain the refrigerant temperature at about 51.2 to 56. 5 °C in the neighborhood of the refrigerant outlet, while as shown in Fig. 6, the refrigerant temperature in the neighborhood of the refrigerant outlet is about 56.4 to 58.4 °C in the absence of the duct member 370, so that the temperature can be reduced by about Δ5 °C at the refrigerant outlet.

As a result, the refrigerant temperature at the refrigerant outlet can be reduced more by using the duct member 370, thus improving the refrigeration cycle efficiency. Incidentally, a temperature reduction of about Δ5 °C at the refrigerant outlet improves the refrigeration cycle efficiency by about 15 %. Further, another experiment shows that the refrigerant temperature can be reduced by the duct member 370 covering at least about one third of the total area of the air path of the radiation heat exchanger 300.

In the embodiment described above, the refrigerant inlet 230, the refrigerant outlet 230 and the neighborhood of the refrigerant outlet are formed on the left side, to which the invention is not limited. Alternatively, the refrigerant inlet 230, the refrigerant outlet 230 and the neighborhood of the refrigerant outlet may be formed on the right side.

In the air conditioning system according to the third embodiment described above, the cylindrical duct member 370 is arranged to introduce the air flow toward the air path of the radiation heat exchanger 300, which duct member 370 is formed strategically to cover the part of the air path of the radiation heat exchanger 300 in the neighborhood of the refrigerant outlet. By covering a part rather than the whole of the radiation heat exchanger 300 with the duct member 370 in this way, the duct member 370 can be formed in simple shape and small size for a reduced parts cost.

The portion not surrounded by the duct member 370 is still high in refrigerant temperature, so that a temperature difference between the cooling air and the refrigerant is ensured and therefore the heat exchange characteristic is not degraded.

The duct member 370 is formed so that the air around the radiation heat exchanger 300 flows from the downstream side in the air flow not toward the air path in the neighborhood of the refrigerant outlet. Thus, the low-temperature cooling air introduced by the duct member 370 flows through the air path in the neighborhood of the refrigerant outlet without the inflow of the high-temperature air from around the radiation heat exchanger 300, thereby improving the refrigeration cycle efficiency.

Also, the duct member 370 is preferably formed so as to surround at least about one third of the total area of the air path of the radiation heat exchanger 300. With the coverage of at least one third of the total area of the air path, the heat exchanger characteristic is not adversely affected even in the case where the high-temperature air around the radiation heat exchanger 300 flows into the portion not covered by the duct member 370.

Also, according to this embodiment, the radiation heat exchanger 300 is formed so that the refrigerant flows substantially horizontally and the neighborhood of the refrigerant outlet is formed on the left side (or the right side) of the air path of the radiation heat exchanger 300. Therefore, the opening formed on the vehicle to introduce the atmospheric air is suitable regardless of whether it is located on the left or right side of the vehicle, thereby leading to superior mountability of the duct member 370 on the vehicle.

Due to the configuration of the radiation heat exchanger 300 in which the refrigerant flows against the air flow, the air path in the neighborhood of the refrigerant outlet can be suitably formed upstream in the air flow low in temperature.

Also, the duct member 370 is formed in such a manner that the air introduced from the opening on the vehicle front at the upstream end of the air flow is led to the air path in the neighborhood of the refrigerant outlet. Therefore, in the automotive air conditioning system according to the invention in which a part but not the whole of the heat radiation exchanger 300 is surrounded by the duct member 370, the temperature increase of the cooling air flowing through the air path in the neighborhood of the refrigerant outlet can be reduced to a greater degree than in the prior art while the air heated in the engine room flows in by circumvention from the front part of the vehicle in stationary state when the air is blowing from behind the vehicle in a stationary state.

### (Fourth embodiment)

According to the third embodiment described above, the radiation heat exchanger 300 is configured so that the header 420 is arranged at the left and right ends of the refrigerant tubes 310a to direct the refrigerant flow substantially horizontally and the air path in the neighborhood of the refrigerant outlet is formed on the left side (or the right side), to which configuration this invention is not limited. As an alternative, the configuration in which the refrigerant flows substantially vertically is also applicable by forming the air path in the neighborhood of the refrigerant outlet on the upper side (or the lower side).

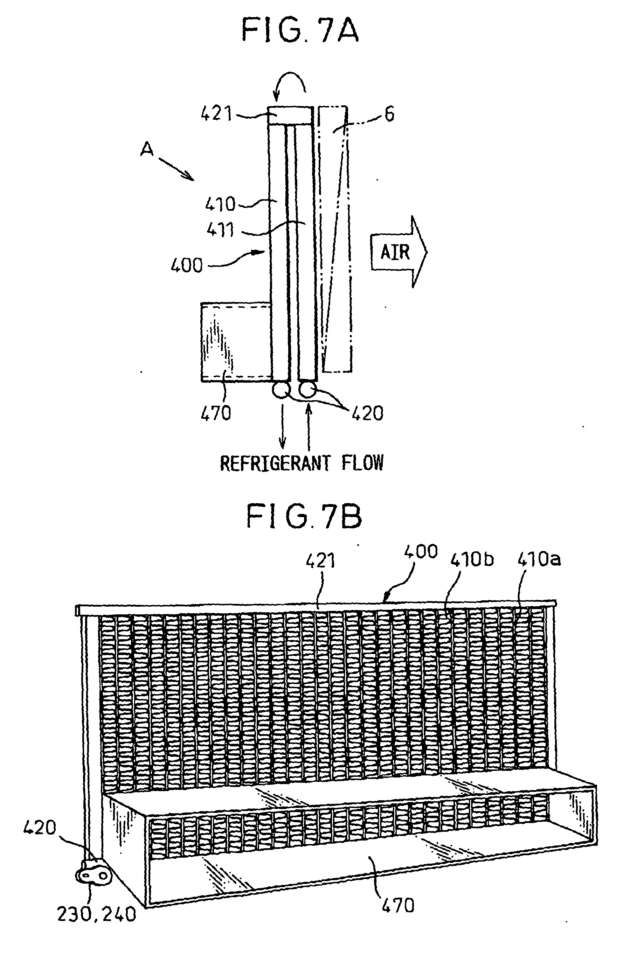

Specifically, as shown in Figs. 7A, 7B, the heat exchange core portion constituting the air path is divided into two longitudinal parts 410, 411 along the air flow, and the headers 420, 421 are formed at the upper and lower ends, respectively, of the heat exchange core portions 410, 411. The headers 420, 421 are connected to each other by a plurality of refrigerant tubes 410a, so that the refrigerant flows against the air flow.

The refrigerant inlet 230 is arranged in the lower-end header 420 arranged downstream in the air flow, and the refrigerant outlet 240 in the lower-end header 420 arranged upstream in the air flow.

As a result, the refrigerant compressed by the compressor 1 flows into the lower-end header 420 from the refrigerant inlet 230 arranged downstream in the air flow, and flows through the downstream refrigerant tube 410a toward the upper-end header 421 from the lower-end header 420, after which the refrigerant, proceeding through the upstream refrigerant tube 410a toward the lower-end header 420 from the upper-end header 421 arranged upstream in the air flow, flows out of the refrigerant outlet 240.

In other words, the high-pressure refrigerant flowing in from the refrigerant inlet 230, after being cooled by heat exchange with the air in the heat exchange core portion 411 downstream in the air flow, exchanges heat with the air introduced from the vehicle front in the heat exchange core portion 410 upstream in the air flow, and flows to the refrigerant outlet 240 in a further cooled state.

The part of the air path of the heat exchange core portion 410 in the neighborhood of the refrigerant outlet of the lower portion thereof is surrounded by the cylindrical duct member 470. As a result, the low-temperature atmospheric air introduced by the duct member 470 can be supplied to the neighborhood of the refrigerant outlet of the heat exchange core portion 410 without inflow of the high-temperature air from around the radiation heat exchanger 400.

According to the embodiments described above, the refrigerant inlet 230, the refrigerant outlet 240 and the neighborhood of the refrigerant outlet are formed in the lower portion, to which the invention is not limited. As an alternative, the refrigerant inlet 230, the refrigerant outlet 240 and the neighborhood of the refrigerant outlet can be formed in the upper portion.

In the air conditioning system according to the second embodiment described above, the radiation heat exchanger 400 is formed so that the refrigerant flows substantially vertically and the neighborhood of the refrigerant outlet is formed on the lower side (or the upper side) of the air path of the radiation heat exchanger 400. As a result, the opening formed in the vehicle for introducing the atmospheric air is suitable regardless of whether it is formed on the upper or lower side of the vehicle and superior mountability of the duct member 470 on the vehicle can be achieved.

### (Fifth embodiment)

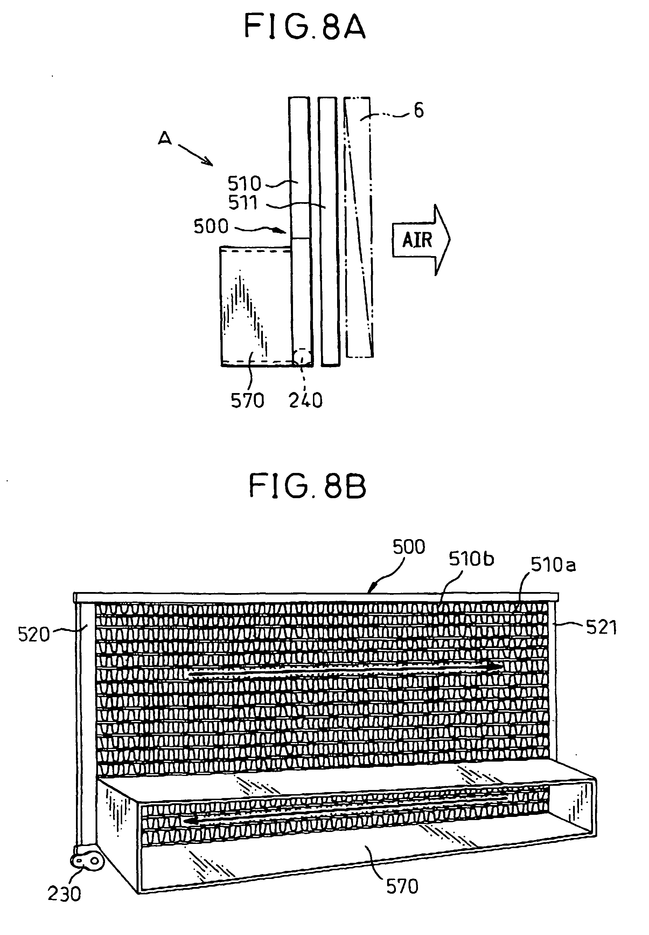

According to this embodiment, as shown in Figs. 8A, 8B, the headers 520, 521 and the heat exchange core portions 510, 511 of the radiation heat exchanger 500 on the downstream side of the air flow are formed in such a manner that the refrigerant flows substantially in horizontal direction like in the first embodiment, while the refrigerant flows by turning around substantially in horizontal direction on the upstream side in the air flow.

Specifically, the heat exchange core portion 511 downstream in the air flow is configured so that the refrigerant flows through the whole path, while in the heat exchange core 510 upstream in the air flow, the refrigerant path is divided into upper and lower parts, so that the refrigerant flows from the upper to the lower side.

As a result, the neighborhood of the refrigerant outlet is formed on the lower side of the air path of the radiation heat exchanger 500. Thus, the part of the heat exchange core portion 510 in the neighborhood of the refrigerant outlet thereof constituting the lower side is surrounded by the cylindrical duct member 570.

According to this embodiment, the heat exchange core portion 510 of the radiation heat exchanger 500 upstream in the air flow is divided into two parts so that the refrigerant flows by turning around. As an alternative, the heat exchange core portion 510 may be divided into three parts so that the refrigerant flows by turning around substantially in S form.

### (Sixth embodiment)

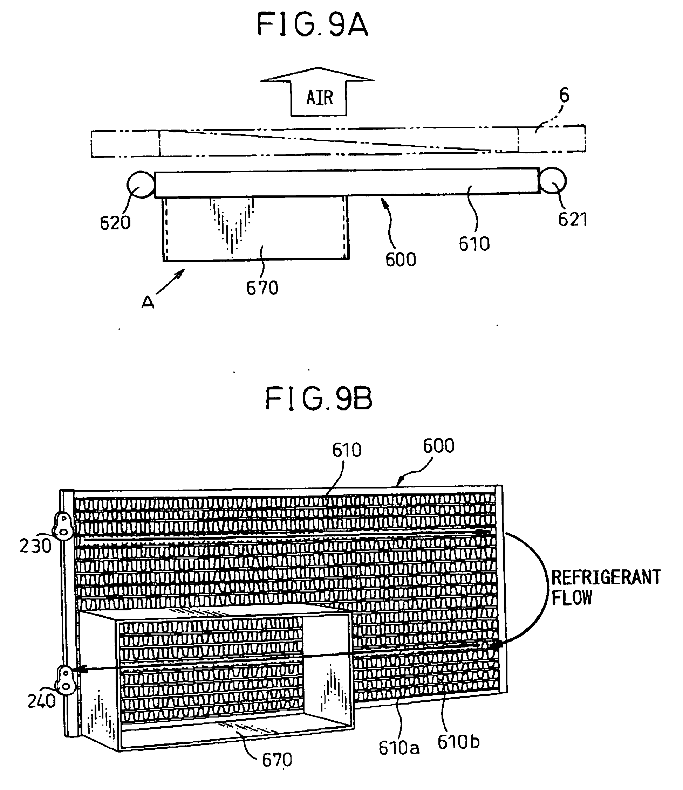

According to the embodiments described above, the radiation heat exchanger 500 is configured in such a manner that the refrigerant flows against the air flow, to which the invention is not limited, and the radiation heat exchanger 500 may alternatively be configured so that the refrigerant flows in the direction perpendicular to the air flow. Specifically, as shown in Figs. 9A, 9B, headers 620, 621 are arranged at the left and right ends, respectively, of the heat exchange core portion 610 and connected to each other by a plurality of refrigerant tubes 610a, while the refrigerant flows from the left header 620 substantially in horizontal direction to the right header 621 and then turns around and flows to the left header 620.

With the configuration according to this embodiment, the neighborhood of the refrigerant outlet is formed on the lower left side of the air path of the radiation heat exchanger 600. Therefore, the air path of the heat exchange core portion 610 in the neighborhood of the refrigerant outlet on the lower side thereof, i.e. the whole or a part of the air path after the turnaround of the refrigerant, for example, may be surrounded by the cylindrical duct member 670.

### (Other embodiments)

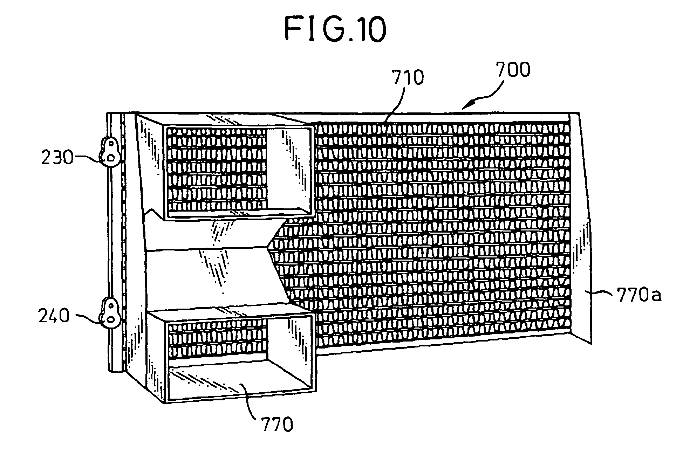

In the embodiments described above, the duct member is rectangular, to which the invention is not limited. Also, as shown in Fig. 10, the duct member 770 may be formed so as to avoid the vehicle body members. Further, the portion not covered by the duct member 770 may be formed with a shield member to prevent the air around the radiation heat exchanger 700 from flowing directly to the heat exchange core portion 710.

Also, instead of carbon dioxide (CO₂) used and sealed in the supercritical vapor compression refrigeration cycle as a refrigerant in the embodiments described above, ethylene, ethane, nitrogen oxide, etc. may alternatively be used.

Further, the aforementioned embodiments are an application to an automotive air conditioning system, to which the invention is not limited. The invention is also applicable to an air conditioning system having a supercritical vapor compression refrigeration cycle for other than vehicles.

While the invention has been described by reference to specific embodiments chosen for the purpose of illustration, it should be apparent that numerous modifications can be made thereto by those skilled in the art without departing from the basic concept and scope of the invention.

## Claims

1. An air conditioning system applicable to a supercritical vapor compression refrigeration cycle with the pressure increasing to or beyond the critical pressure on high-pressure side, comprising a radiation heat exchanger (200, 300, 400, 500, 600, 700) for cooling a high-pressure refrigerant discharged from a compressor (1), **characterised in that**
the radiation heat exchanger (200, 300, 400, 500, 600, 700) is arranged downstream, in the air flow, of a leading member (270, 280, 370, 470, 570, 670, 770) for strategically leading the air from outside to an air path of the radiation heat exchanger (200, 300, 400, 500, 600, 700) in the neighborhood of a refrigerant outlet.

2. An air conditioning system according to claim 1,
wherein the radiation heat exchanger (200) is formed in such a manner that the refrigerant flows substantially in horizontal direction, and the air path in the neighborhood of the refrigerant outlet is formed on the lower side of the air path of the radiation heat exchanger (200), and
wherein the leading member (270) is arranged in such a manner that the air path on the lower side of the radiation heat exchanger (200) is strategically surrounded by a plurality of guide members (271, 272, 273, 274, 283, 284, 285).

3. An air conditioning system according to claim 2,
wherein the plurality of the guide members (271, 272, 273, 274, 283, 284, 285) include a partitioning member (271) for separating the air path in the neighborhood of the refrigerant inlet and the air path in the neighborhood of the refrigerant outlet from each other.

4. An air conditioning system according to claim 2 or 3,
wherein the plurality of the guide members (272, 273, 274, 283, 284, 285) are each formed in such a manner as to suppress the inflow of the circumventing air toward the air path in the neighborhood of the refrigerant outlet.

5. An air conditioning system according to any one of claims 1 to 4,
wherein the radiation heat exchanger (200) is mounted upstream of an on-vehicle engine radiator (6) in the air flow, and
wherein the plurality of the guide members (271, 272, 273, 274, 283, 284, 285) of the leading member (270, 280) are arranged on the vehicle body.

6. An air conditioning system according to claim 1,
wherein the leading member is a cylindrical duct member (370, 470, 570, 670, 770) formed in such a manner as to strategically surround the air path of the radiation heat exchanger (300, 400, 500, 600, 700) in the neighborhood of the refrigerant outlet.

7. An air conditioning system according to claim 6,
wherein the duct member (370, 470, 570, 670, 770) is formed in such a manner that the air around the radiation heat exchanger (300, 400, 500, 600, 700) is prevented from flowing toward the air path in the neighborhood of the refrigerant outlet from the downstream side in the air flow.

8. An air conditioning system according to claim 6 or 7,
wherein the duct member (370, 470, 570, 670, 770) is formed preferably in such a manner as to surround at least about one third of the total area of the air path of the radiation heat exchanger (300, 400, 500, 600, 700.)

9. An air conditioning system according to any one of claims 6 to 8,
wherein the radiation heat exchanger (400) is formed in such a manner that the refrigerant flows substantially in vertical direction, and the air path in the neighborhood of the refrigerant outlet is formed on a selected one of the upper and lower sides of the air path of the condenser (400).

10. An air conditioning system according to any one of claims 6 to 8,
wherein the radiation heat exchanger (300, 500, 600) is formed in such a manner that the refrigerant flows substantially in horizontal direction, and the air path in the neighborhood of the refrigerant outlet is formed on a selected one of the left and right sides of the air path of the radiation heat exchanger (300, 500, 600).

11. An air conditioning system according to claim 9 or 10,
wherein the radiation heat exchanger (300, 400, 500) is formed in such a manner that the refrigerant flows against the air flow.

12. An automotive air conditioning system according to any one of claims 6 to 11,
wherein the radiation heat exchanger (300, 400, 500, 600) is arranged upstream, in the air flow, of an on-vehicle engine radiator (6), and
wherein the duct member (370, 470, 570, 670) is formed in such a manner that the air introduced from an opening on the vehicle front at the upstream end of the air flow is led to the air path in the neighborhood of the refrigerant outlet.

## Patentansprüche

1. Klimaanlagensystem, anwendbar auf einen superkritischen Dampfkompressions-Kälteerzeugungskreis, bei welchem der Druck auf oder über den kritischen Druck auf der Hochdruckseite erhöht wird, umfassend einen Abstrahl-Wärmetauscher (200, 300, 400, 500, 600, 700) zum Kühlen eines Hochdruckkältemittels, welches von einem Kompressor (1) abgegeben wird, **dadurch gekennzeichnet, dass**
der Abstrahl-Wärmetauscher (200, 300, 400, 500, 600, 700) stromabwärts in der Luftströmung eines Führungselements (270, 280, 370, 470, 570, 670, 770) angeordnet ist, um die Luft strategisch von außen zu einem Luftpfad des Abstrahl-Wärmetauschers (200, 300, 400, 500, 600, 700) in der Nachbarschaft eines Kältemittelauslasses zu führen.

2. Klimaanlagensystem gemäß Anspruch 1,
wobei der Abstrahl-Wärmetauscher (200) in solch einer Weise ausgebildet ist, dass das Kältemittel im Wesentlichen in horizontaler Richtung strömt, und der Luftpfad in der Nachbarschaft des Kältemittelauslasses auf der unteren Seite des Luftpfades des Abstrahl-Wärmetauschers (200) ausgebildet ist, und
wobei das Führungselement (270) in solch einer Weise angeordnet ist, dass der Luftpfad auf der unteren Seite des Abstrahl-Wärmetauschers (200) strategisch durch eine Mehrzahl von Führungselementen (271, 272, 273, 274, 283, 284, 285) umgeben wird.

3. Klimaanlagensystem gemäß Anspruch 2,
wobei die mehreren Führungselemente (271, 272, 273, 274, 283, 284, 285) ein Unterteilungselement (271), um den Luftpfad in der Nachbarschaft des Kältemitteleinlasses und den Luftpfad in der Nachbarschaft des Kältemittelauslasses voneinander zu trennen.

4. Klimaanlagensystem gemäß Anspruch 2 oder 3,
wobei die mehreren Führungselemente (272, 273, 274, 283, 284, 285) alle in solch einer Weise ausgebildet sind, dass diese das Einströmen der umgehenden Luft zu dem Luftpfad in der Nachbarschaft des Kältemittelauslasses unterdrücken.

5. Klimaanlagensystem gemäß irgendeinem der Ansprüche 1 bis 4, wobei
wobei der Abstrahl-Wärmetauscher (200) stromaufwärts eines Fahrzeugeinbau-Motorradiators (6) in der Luftströmung angebracht ist, und
wobei die mehreren Führungselemente (271, 272, 273, 274, 283, 284, 285) des Führungselements (270, 280) auf dem Fahrzeugrumpf angeordnet sind.

6. Klimaanlagensystem gemäß Anspruch 1,
wobei das Führungselement ein zylindrisches Durchgangselement (370, 470, 570, 670, 770) ist, welches in solch einer Weise ausgebildet ist, dass es strategisch den Luftpfad des Abstrahl-Wärmetauschers (300, 400, 500, 600, 700) in der Nachbarschaft des Kältemittelauslasses umgibt.

7. Klimaanlagensystem gemäß Anspruch 6,
wobei das Durchgangselement (370, 470, 570, 670, 770) in solch einer Weise ausgebildet ist, dass die Luft um den Abstrahl-Wärmetauscher (300, 400, 500, 600, 700) herum daran gehindert wird, zu dem Luftpfad in der Nachbarschaft des Kältemittelauslasses von der stromabwärtigen Seite in der Luftströmung zu strömen.

8. Klimaanlagensystem gemäß Anspruch 6 oder 7,
wobei das Durchgangselement (370, 470, 570, 670, 770) vorzugsweise in solch einer Weise ausgebildet ist, dass es zumindest etwa ein Drittel des Gesamtbereichs des Luftpfads des Abstrahl-Wärmetauschers (300, 400, 500, 600, 700) umschließt.

9. Klimaanlagensystem gemäß irgendeinem der Ansprüche 6 bis 8,
wobei der Abstrahl-Wärmetauscher (400) in solch einer Weise ausgebildet ist, dass das Kältemittel im Wesentlichen in vertikaler Richtung strömt, und der Luftpfad in der Nachbarschaft des Kältemittelauslasses auf einer ausgewählten von oberer und unterer Seite des Luftpfades des Kondensors (400) ausgebildet ist.

10. Klimaanlagensystem gemäß irgendeinem der Ansprüche 6 bis 8,
wobei der Abstrahl-Wärmetauscher (300, 500, 600) in solch einer Weise ausgebildet ist, dass das Kältemittel im Wesentlichen in horizontaler Richtung strömt, und der Luftpfad in der Nachbarschaft des Kältemittelauslasses auf einer ausgewählten von linker und rechter Seite des Luftpfades des Abstrahl-Wärmetauschers (300, 500, 600) ausgebildet ist.

11. Klimaanlagensystem gemäß Anspruch 9 oder 10,
wobei der Abstrahl-Wärmetauscher (300, 400, 500) in solch einer Weise ausgebildet ist, dass das Kältemittel gegen die Luftströmung strömt.

12. Kraftfahrzeug-Klimaanlagensystem gemäß irgendeinem der Ansprüche 6 bis 11,
wobei der Abstrahl-Wärmetauscher (300, 400, 500, 600) stromaufwärts in der Luftströmung von einem Fahrzeugeinbau-Motorradiator (6) angeordnet ist, und wobei das Durchgangselement (370, 470, 570, 670) in solch einer Weise ausgebildet ist, dass die von einer Öffnung auf der Fahrzeugfront an dem stromaufwärtigen Ende der Luftströmung zu dem Luftpfad in der Nachbarschaft des Kältemittelauslasses geleitet wird.

## Revendications

1. Système de conditionnement d'air applicable à un cycle de réfrigération à compression de vapeur supercritique avec la pression augmentant à ou au-delà de la pression critique sur un côté à haute pression, comprenant un échangeur de chaleur à radiation (200, 300, 400, 500, 600, 700) pour refroidir un réfrigérant à haute pression déchargé à partir d'un compresseur (1), **caractérisé en ce que**
l'échangeur de chaleur à radiation (200, 300, 400, 500, 600, 700) est agencé en aval, dans le débit d'air, d'un organe d'attaque (270, 280, 370, 470, 570, 670, 770) pour mener stratégiquement l'air à partir de l'extérieur à un chemin d'air de l'échangeur de chaleur à radiation (200, 300, 400, 500, 600, 700) au voisinage d'une sortie de réfrigérant.

2. Système de conditionnement d'air selon la revendication 1,
dans lequel l'échangeur de chaleur à radiation (200) est formé de telle manière que le réfrigérant s'écoule essentiellement dans une direction horizontale, et le chemin d'air au voisinage de la sortie de réfrigérant est formé sur le côté inférieur du chemin d'air de l'échangeur de chaleur à radiation (200), et
dans lequel l'organe d'attaque (270) est agencé de telle manière que le chemin d'air sur le côté inférieur de l'échangeur de chaleur à radiation (200) soit entouré stratégiquement par une pluralité d'organes de guidage (271, 272, 273, 274, 283, 284, 285).

3. Système de conditionnement d'air selon la revendication 2,
dans lequel la pluralité des organes de guidage (271, 272, 273, 274, 283, 284, 285) incluent un organe de séparation (271) pour séparer le chemin d'air au voisinage de l'entrée de réfrigérant et le chemin d'air au voisinage de la sortie de réfrigérant l'un de l'autre.

4. Système de conditionnement d'air selon la revendication 2 ou 3,
dans lequel la pluralité des organes de guidage (273, 273, 274, 283, 284, 285) sont chacun formé de telle manière à supprimer le débit rentrant de l'air contournant vers le chemin d'air au voisinage de la sortie de réfrigérant.

5. Système de conditionnement d'air selon l'une quelconque des revendications 1 à 4,
dans lequel l'échangeur de chaleur à radiation (200) est monté en amont d'un radiateur (6) de moteur embarqué sur un véhicule dans le débit d'air, et
dans lequel la pluralité des organes de guidage (271, 272, 273, 274, 283, 284, 285) des organes d'attaque (270, 280) sont agencés sur le corps du véhicule.

6. Système de conditionnement d'air selon la revendication 1,
dans lequel l'organe d'attaque est un organe de conduit cylindrique (370, 470, 570, 670, 770) formé de telle manière à entourer stratégiquement le chemin d'air de l'échangeur de chaleur à radiation (300, 400, 500, 600, 700) au voisinage de la sortie de réfrigérant.

7. Système de conditionnement d'air selon la revendication 6,
dans lequel l'organe de conduit (370, 470, 570, 670, 770) est formé de telle manière que l'air autour de l'échangeur de chaleur à radiation (300, 400, 500, 600, 700) soit empêché de s'écouler vers le chemin d'air au voisinage de la sortie de réfrigérant à partir du côté de l'aval dans le débit d'air.

8. Système de conditionnement d'air selon la revendication 6 ou 7,
dans lequel l'organe de conduit (370, 470, 570, 670, 770) est formé préférablement de telle manière à entourer au moins environ un tiers de l'aire totale du chemin d'air de l'échangeur de chaleur à radiation (300, 400, 500, 600, 700).

9. Système de conditionnement d'air selon l'une quelconque des revendications 6 à 8,
dans lequel l'échangeur de chaleur à radiation (400) est formé de telle manière que le réfrigérant s'écoule essentiellement dans une direction verticale, et que le chemin d'air au voisinage de la sortie de réfrigérant soit formé sur l'un sélectionné parmi les côtés supérieur et inférieur du chemin d'air du condenseur (400).

10. Système de conditionnement d'air selon l'une quelconque des revendications 6 à 8,
dans lequel l'échangeur de chaleur à radiation (300, 500, 600) est formé de telle manière que le réfrigérant s'écoule essentiellement dans une direction horizontale, et que le chemin d'air au voisinage de la sortie de réfrigérant soit formé sur l'un sélectionné des côtés gauche et droite du chemin d'air de l'échangeur de chaleur à radiation (300, 500, 600).

11. Système de conditionnement d'air selon la revendication 9 ou 10,
dans lequel l'échangeur de chaleur à radiation (300, 400, 500) est formé de telle manière que le réfrigérant s'écoule contre le débit d'air.

12. Système de conditionnement d'air d'une automobile selon l'une quelconque des revendications 6 à 11,
dans lequel l'échangeur de chaleur à radiation (300, 400, 500, 600) est disposé en amont, dans le débit d'air, d'un radiateur (6) de moteur embarqué sur un véhicule, et
dans lequel l'organe de conduit (370, 470, 570, 670) est formé de telle manière que l'air introduit à partir d'une ouverture sur le devant du véhicule à l'extrémité amont du débit d'air soit mené au chemin d'air au voisinage de la sortie de réfrigérant.
